# EUROPÄISCHE PATENTANMELDUNG

(11) **EP 1 376 815 A1**
(43) Veröffentlichungstag der Anmeldung: **02.01.2004**
(21) Anmeldenummer: 03012216.2
(22) Anmeldetag: 06.06.2003
(51) Int. Cl.: H02K 1/27, H02K 1/14, H02K 1/06, H02K 15/02, H02K 15/03

(54) **Elektrische Maschine**

(30) Priorität: 18.06.2002 DE 10227129
(71) Anmelder: Peter, Cornelius, 77815 Bühl (DE)
(72) Erfinder: Peter, Cornelius, 77815 Bühl (DE)
(74) Vertreter: Altenburg, Udo, Dipl.-Phys.

(57) **Zusammenfassung**

Die Erfindung betrifft eine elektrische Maschine, deren Statorbleche (1) und/oder Rotorbleche (7) mit Einprägungen (6; 12) versehen sind, um einem Auftreten von magnetischen Kurzschlüssen entgegenzuwirken. Darüber hinaus betrifft die Erfindung ein entsprechendes Verfahren zur Herstellung derartiger Stator- bzw. Rotorbleche.

## Beschreibung

Die Erfindung betrifft eine elektrische Maschine mit einem Stator und mit einem Rotor, wobei sowohl der Stator als auch der Rotor aus einem aus einzelnen Blechen geschichteten Bleckpaket ausgebildet sein kann. Darüber hinaus betrifft die Erfindung ein Verfahren zur Herstellung von einzelnen Blechen für Blechpakete eines Stators oder eines Rotors.

Aus dem Stand der Technik ist bekannt, dass die Feldwicklung von permanent erregten Synchronmaschinen mit elektronischer Kommutierung im Stator angeordnet ist. Weisen derartige Gleichstrommotoren einen Innenläufer auf, so sind die Blechpakete des Stators in der Regel mit einem dieses außen umlaufenden Rückschlussring versehen. Dieser Rückschlussring ist mit radial nach innen zum Rotor der elektrischen Maschine hin ragenden Zähnen versehen, welche die Magnetpole des Stators ausbilden.

Ein mit einem Rückschlussring versehener Stator ist jedoch mit dem Nachteil behaftet, dass sich dessen Wicklung relativ aufwändig gestaltet, da sie von innen erfolgen muss. Im Stand der Technik sind hierzu im Prinzip drei unterschiedliche Lösungen vorgeschlagen worden, wie die Bewicklung eines solchen Stators von außen erfolgen kann.

So ließe sich der Stator in die Komponenten einzelner Zähne und eines Rückschlussringes aufteilen, so dass eine sehr einfache Bewicklung der Zähne mit Einzelspulen oder deren Bestückung mit vorgefertigten Spulen möglich ist, wobei im Anschluss daran die Montage der fertiggestellten bewickelten Zähne in den Rückschlussring erfolgt. Bei solch einer Ausgestaltung des Stators erhöhen sehr viele Einzelteile, bedingt durch die Herstellung und Montage, die Kosten erheblich. Darüber hinaus muss für die einzelnen, auf den Einzelzähnen aufgesetzten Spulen eine zusätzliche elektrische Verbindungstechnik untereinander geschaffen werden.

In einer weiteren, aus dem Stand der Technik bekannten Ausgestaltung eines Stators für elektrische Maschinen wird vorgeschlagen, die Zähne des Stators radial innenliegend, d.h. dem Rotor gegenüberliegend, mit sogenannten Streustegen zu verbinden. Dadurch wird ermöglicht, dass der so ausgebildete Zähnestern, der zwangsläufig als ein Blechteil herstellbar ist, in nur einem Arbeitsgang von außen bewickelt werden kann. Im Anschluss an die Bewicklung erfolgt die Montage des so bewickelten Zähnesterns in einem außenseitigen Rückschlussring.

Es ist jedoch bekannt, dass derartige Streustege wie magnetische Kurzschlüsse wirken. In Folge dieser Querinduktivität ergeben sich deutlich höhere Verluste, was mit einem verringerten Wirkungsgrad einer solche Statorbleche aufweisenden elektrischen Maschine einhergeht.

Prinzipiell könnte diesem Problem dadurch begegnet werden, dass die Streustege in einer solch schmalen Breite gestanzt werden, die deutlich geringer als die zur Anwendung kommende Blechdicke des Bleches ist, da schmalere Streustege das vorhergehend geschilderte magnetische Problem annähernd lösen könnten. Der hierzu durchzuführende Stanzvorgang ist jedoch mit einem vernünftigen Aufwand nicht durchführbar.

Eine weitere Lösung, um die Bewicklung eines Stators von außen zu ermöglichen, offenbart die deutsche Offenlegungsschrift DE 198 42 948 A1. In dieser wird ein Herstellungsverfahren eines Blechpakets eines Stators für einen Elektromotor gezeigt, wobei das Blechpaket einen solchen Aufbau aufweist, dass es aus zumindest zwei unterschiedlichen Blechschnitten schichtweise zusammengesetzt wird. Beispielsweise soll nur jedes fünfte Blech innenseitig Streustege aufweisen, wobei die zwischen diesen Blechen liegenden Bleche des Blechpakets ohne Streustege ausgeführt sind. Ein solches Blechpaket lässt sich ebenfalls von außen in einem Arbeitsgang optimal bewickeln. Darüber hinaus stören die Streustege nur jedes fünften Blechs im Blechpaket nicht mehr nennenswert den magnetischen Kreis, so dass die Verluste gering gehalten werden können. Jedoch ist eine aus dieser Druckschrift bekannte Ausgestaltung mit dem Nachteil behaftet, dass zur Herstellung und Montage eines solchen Stator-Blechpakets der durchzuführende Stanz- und Paketiervorgang kompliziert und daher kostenintensiv ist. Des weiteren weist ein derartiges Blechpaket bei den hohen Rotationsgeschwindigkeiten einer elektrischen Maschine zwangsläufig eine begrenzte mechanische Stabilität auf.

Rotoren für elektrische Maschinen bestehen üblicherweise aus einem magnetisch leitenden Trägerkörper, auf dem die Permanentmagnete segmentweise außenliegend befestigt werden, so dass sie bei zusammengebauter Maschine den Statorzähnen des Stator-Blechpakets gegenüberliegen. Insbesondere bei sicherheitskritischen Anwendungen müssen diese Segmentmagnete durch ein zusätzlich aufgeschrumpftes Rohr, beispielsweise aus Edelstahl, gegen Herabfallen gesichert werden. Der hierfür notwendige Segmentschleifvorgang ist jedoch teuer. Darüber hinaus soll aus Gründen einer einfachen Montage und Vermeidung zusätzlicher rotierender Masse eine zusätzliche Segmentsicherung möglichst umgangen werden.

Zu diesem Zweck ist es aus dem Stand der Technik beispielsweise bekannt, quaderförmige Magnete in einem Rotor-Blechpaket quasi einzubetten, indem diese in entsprechende Ausnehmungen der Bleche des Blechpakets des Rotors aufgenommen werden. Im Vergleich zu segmentförmigen, kreisförmig gekrümmten Magneten sind quaderförmige Magnete erheblich kostengünstiger umzusetzen. Durch die in das Rotorblech gestanzten Ausnehmungen zur Aufnahme von quaderförmigen Magneten ist darüber hinaus keine zusätzliche Sicherung, beispielsweise in Form eines aufzuschrumpfenden Edelstahlrohres, erforderlich. Bedingt durch die Ausnehmungen weisen die Rotorbleche jedoch wieder außenliegend Streustege auf, die, wie vorhergehend bereits geschildert, mit Verlusten in Folge magnetischer Kurzschlüsse einhergehen.

Eine weitere Lösung aus dem Stand der Technik, die beispielsweise die deutsche Offenlegungsschrift DE 199 15 664 A1 offenbart, wendet das vorhergehend im Zusammenhang mit dem Stator bekannte Prinzip an, das Rotor-Blechpaket aus wenigstens zwei unterschiedlichen Blechschnitten zu schichten, wobei beispielsweise nur jedes fünfte Blech mit den Streustegen ausgebildet ist, alle anderen Bleche jedoch außenseitig keine Streustege aufweisen. Jedoch ist auch ein derartiges Blechpaket für einen Rotor im Zuge der Herstellung nur durch einen komplizierteren Stanz- und Paketiervorgang der Einzelbleche herstellbar. Darüber hinaus zeichnet sich ein derartiges Blechpaket mit unterschiedlichen Blechschnitten, wie bereits erwähnt, durch eine begrenzte mechanische Stabilität aus.

Ausgehend von diesen im Zusammenhang mit dem Stand der Technik geschilderten Nachteilen ist es eine Aufgabe der vorliegenden Erfindung, die Querinduktivität und die damit verbundenen magnetischen Kurzschlüsse in den Statorblechen und/oder Rotorblechen einer gattungsgemäßen elektrischen Maschine weiter zu reduzieren.

Eine weitere Aufgabe der Erfindung besteht darin, ein Verfahren zur Herstellung von Statorblechen und Rotorblechen mit Streustegen, welche eine entsprechende verringerte Querinduktivität aufweisen, zur Verfügung zu stellen.

Gelöst werden diese Aufgaben einerseits für eine elektrische Maschine mit einem Stator nach den Merkmalen des Anspruchs 1 und für eine elektrische Maschine mit einem Rotor nach den Merkmalen des Anspruchs 3, sowie andererseits durch die Verfahrensmerkmale gemäß Anspruch 5.

Weitere Vorteile, Merkmale und Ausgestaltungen ergeben sich aus den jeweiligen Unteransprüchen.

Gemäß der Erfindung wird folglich vorgeschlagen, magnetische Kurzschlüsse in den Streustegen von Rotor- bzw. Statorblechen dadurch abzuschwächen, dass die Streustege eine entsprechende Einprägung aufweisen, so dass, in der jeweiligen Ebene der Bleche gesehen, sozusagen in deren Axialrichtung, die Streustege eine geringere Dicke als die Blechdicke aufweisen.

In einer vorteilhaften Ausgestaltung gemäß der Erfindung soll die Dickenverringerung der Streustege bis auf etwa ein Viertel bis zur Hälfte der ursprünglichen Blechdicke erfolgen.

Gemäß der Erfindung werden sowohl die Bleche eines Stators als auch eines Rotors in einem Herstellungsverfahren dadurch erzeugt, dass das jeweilige Blech im Bereich der Streustege eingeprägt und anschließend die in diesem Blech vorzusehenden Ausnehmungen ausgestanzt werden, wobei der durch den Einprägevorgang entstehende Materialüberschuss, der sich dadurch ergibt, dass während des Einprägens Material in die die Einprägung umgebende Bereiche plastisch verschoben wird, anschließend mit ausgestanzt wird, so dass die ursprüngliche Blechdicke in diesen umgebenden Bereichen formgetreu beibehalten wird, um die Maßhaltigkeit des so gestanzten Bleches nicht zu beeinflussen.

Diese Maßnahme kann durch einen entsprechend geformten Prägestempel erreicht werden, wobei gemäß der Erfindung der Prägewinkel einerseits und der Prägeradius im Grund der Einprägung andererseits so zu wählen sind, dass sich die Materialformung beim Prägen ausschließlich im plastischen Bereich ergibt.

Die Dickenverringerung im Bereich der Streustege kann den Streufluss der magnetischen Kurzschlüsse auf zweifache Weise abschwächen. Durch die Dickenverringerung wird entsprechend der Einprägung auch der wirksame Querschnitt dieser Streustege vermindert.

Des Weiteren wird durch die in Folge der Einprägung aufgebrachte mechanische Spannung in den Streustegen die relative Permeabilität in diesem Bereich erheblich reduziert, wodurch sich die magnetische Leitfähigkeit deutlich verschlechtert und magnetische Kurzschlüsse verhindert werden.

Da mit derartigen Stator- bzw. Rotorblechen, die in ihrer Dicke reduzierte Streustege aufweisen, wiederum Blechpakete herstellbar sind, bei denen jedes einzelne Blech diese Streustege aufweist, lässt sich eine hohe mechanische Stabilität eines so paketierten Blechpakets eines Stators oder Rotors aufrecht erhalten.

Bei der Herstellung durch das erfindungsgemäße Verfahren ist lediglich ein Blechschnitt erforderlich, wobei auf einfachste Weise der Einprägevorgang sich in den Stanzvorgang der Bleche integrieren lässt, so dass eine uneingeschränkte Maßhaltigkeit der gestanzten Einzelbleche und damit des gesamten paketierten Blechpakets erreicht werden kann. Hierdurch lassen sich auch die Herstellungskosten erheblich minimieren.

Die Erfindung wird nachfolgend anhand von zwei Ausführungsbeispielen unter Bezugnahme auf die beiliegenden Zeichnungen näher erläutert. Es zeigen:
- Fig. 1: eine schematische Darstellung eines Statorblechs mit zusätzlicher Schnittansicht gemäß der Erfindung; und
- Fig. 2: eine schematische Darstellung eines Rotorblechs mit zusätzlicher Schnittansicht gemäß der Erfindung.

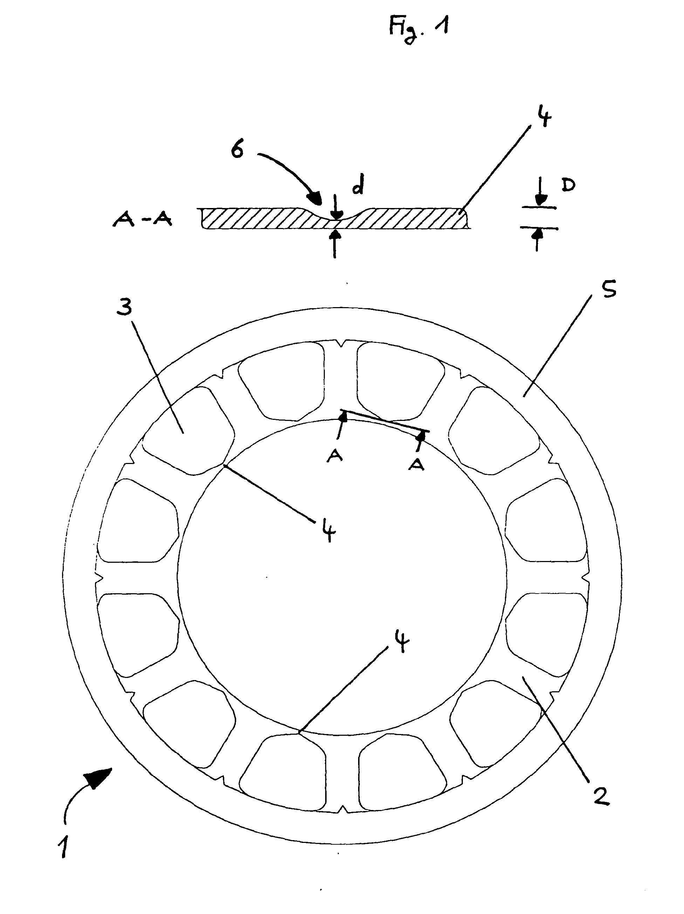

In Fig. 1 is schematisch ein Statorblech 1 gezeigt. Das Statorblech 1 weist eine Blechdicke D auf.

Dieses Statorblech 1 weist in gleichen Abständen zueinander mehrere Statorzähne 2 mit Ausnehmungen 3 dazwischen auf, so dass sich ein Statorstern ausbildet. Die Statorzähne 2 werden, hier nicht gezeigt, von entsprechenden Spulen umgeben.

Radial innenliegend sind die Statorzähne 2 des Statorsterns jeweils durch Streustege 4 miteinander verbunden, so dass sich ein durchgehender Ring ausbildet.

Radial außenliegend, nachdem die Statorzähne 2 bewickelt wurden, befindet sich ein Rückschlussring 5, der das Statorblech 1 vervollständigt.

Wie in der Schnittdarstellung entlang der Linie A-A gezeigt ist, weist jeder Streusteg 4 eine entsprechende Vertiefung bzw. Einprägung 6 auf. Die Dicke d der Einprägung 6 bzw. der Streustege 4 ist geringer als die Blechdicke D des Statorblechs 1. Wie in dieser Schnittansicht zu erkennen ist, handelt es sich bei der Einprägung 6 um eine konkave Ausnehmung, wobei die Dicke d des Streustegs 4 bei der vorliegenden Ausführung nur die Hälfte der ursprünglichen Blechdicke D beträgt.

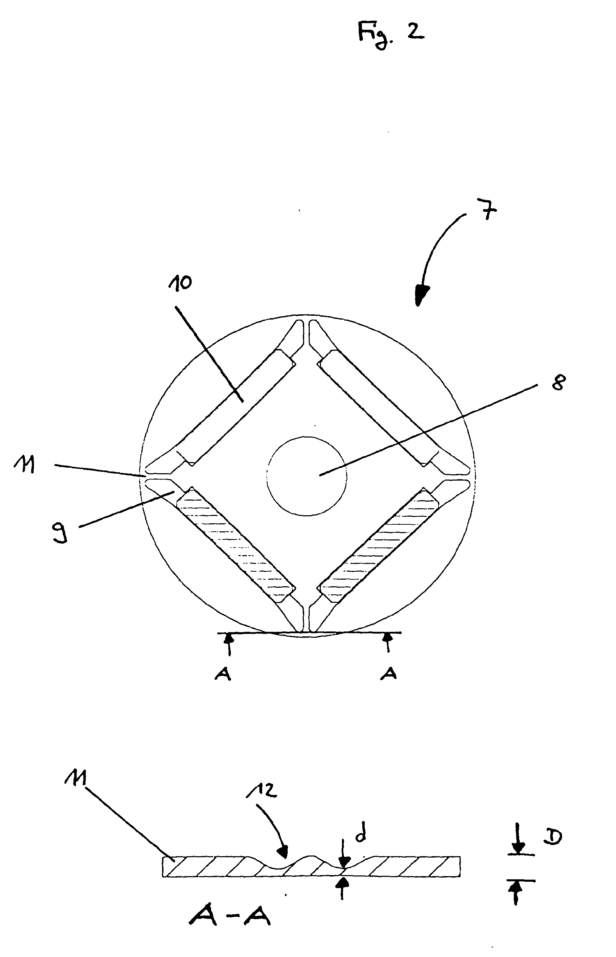

Figur 2 zeigt ein Rotorblech 7, in dem eine Ausnehmung 8 zur Aufnahme einer Rotorwelle vorgesehen ist. Das Rotorblech 7 weist ebenfalls eine Blechdicke D auf.

In dem Rotorblech 7 sind diametral gegenüberliegend längliche Ausnehmungen 9 vorgesehen, die in das Rotorblech 7 zur Aufnahme von quaderförmigen Permanentmagneten 10 eingestanzt sind.

An den jeweils gegenüberliegenden Enden der Ausnehmungen 9 weist das Rotorblech 7 entsprechende Streustege 11 auf.

Wie in der Schnittansicht entlang der Linie A-A dieser Fig. 2 gezeigt ist, weisen gemäß der Erfindung diese Streustege 11 ebenfalls eine entsprechende Einprägung 12 auf, die die Dicke d in diesem Bereich auf die Hälfte der ursprünglichen Blechdicke D reduziert.

Sowohl in diesen eingeprägten Streustegen 4 des Statorblechs 1 als auch in den Streustegen 11 des Rotorblechs 7 wird durch entsprechende Dickenverringerung der Ausbildung von magnetischen Kurzschlüssen entgegengewirkt.

## Patentansprüche

1. Elektrische Maschine mit einem Rotor und mit einem Stator, der aus einzelnen Statorblechen (1) zu einem Blechpaket geschichtet ist, wobei die Statorbleche (1) des Blechpakets des Stators eine Blechdicke (D) und Statorzähne (2) und zwischen den Statorzähnen (2) Streustege (4) aufweisen, **dadurch gekennzeichnet, dass** die Streustege (4) in der Ebene des Statorblechs (1) jeweils eine Einprägung (6) mit einer geringeren Dicke (d) als die Blechdicke (D) aufweisen.

2. Elektrische Maschine nach Anspruch 1, **dadurch gekennzeichnet, dass** die Dicke (d) der eingeprägten Streustege (4) zumindest ein Viertel bis die Hälfte der Blechdicke (D) beträgt.

3. Elektrische Maschine mit einem Stator und mit einem Rotor, der aus einzelnen Rotorblechen (7) zu einem Blechpaket geschichtet ist, wobei die Rotorbleche (7) des Blechpakets des Rotors eine Blechdicke (D) und Ausnehmungen (9) zur Aufnahme von Permanentmagneten (10) und in dem Bereich elektromagnetisch korrespondierender Ausnehmungen (9) Streustege (11) aufweisen, **dadurch gekennzeichnet, dass** die Streustege (11) in der Ebene des Rotorblechs (7) jeweils eine Einprägung (12) mit einer geringeren Dicke (d) als die Blechdicke (D) aufweisen.

4. Elektrische Maschine nach Anspruch 3, **dadurch gekennzeichnet, dass** die Dicke (d) der eingeprägten Streustege (11) zumindest ein Viertel bis die Hälfte der Blechdicke (D) beträgt.

5. Verfahren zur Herstellung von Blechen für Blechpakete für einen Stator oder einen Rotor einer elektrischen Maschine, welche jeweils Streustege (4;11) aufweisen, **gekennzeichnet durch** folgende Schritte:
- Einprägen eines Blechs im Bereich der Streustege (4;11) auf eine definierte Dicke (d), welche kleiner als die Blechdicke (D) ist;
- Stanzen von Ausnehmungen (3;9) in diesem Blech;
wobei das Material beim Einprägen in Bereiche des Blechs verdrängt wird, die beim anschließenden Stanzen mit ausgestanzt werden, so dass die ursprüngliche Blechdicke (D) in den die eingeprägten Streustege (4; 11) umgebenden Bereichen des Blechs beibehalten wird.

6. Verfahren nach Anspruch 5, **dadurch gekennzeichnet, dass** ein Prägewinkel und Prägeradius derart gewählt ist, dass die Materialverformung beim Einprägen ausschließlich im plastischen Bereich liegt.
